(19) Europäisches Patentamt
European Patent Office
Office européen des brevets

(11) **EP 4 436 184 A1**

(12) **EUROPEAN PATENT APPLICATION**

(43) Date of publication:
**25.09.2024 Bulletin 2024/39**

(21) Application number: **23305376.8**

(22) Date of filing: **20.03.2023**

(51) International Patent Classification (IPC):
*H04N 19/96* (2014.01)    *H04N 19/119* (2014.01)
*H04N 19/176* (2014.01)    *H04N 19/70* (2014.01)
*H04N 19/52* (2014.01)    *H04N 19/577* (2014.01)
*H04N 19/54* (2014.01)    *H04N 19/103* (2014.01)

(52) Cooperative Patent Classification (CPC):
**H04N 19/96; H04N 19/103; H04N 19/176;
H04N 19/52; H04N 19/54; H04N 19/577;
H04N 19/70;** H04N 19/119; H04N 19/61

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **BLESTEL, Médéric
35170 BRUZ (FR)**
• **LE LEANNEC, FABRICE
35830 BETTON (FR)**
• **ANDRIVON, PIERRE
35340 LIFFRE (FR)**
• **RADOSAVLJEVIC, MILOS
35000 RENNES (FR)**

(74) Representative: **RVDB Rennes
44 rue Lariboisière
35235 Thorigné-Fouillard (FR)**

(54) **DECODING VIDEO PICTURE DATA USING AFFINE MOTION FIELDS DEFINED BY CONTROL POINT MOTION VECTORS**

(57)    The present application relates to a method of decoding a video picture by means of motion compensated temporal bi-prediction of an inter coded block using two reference video pictures in two separate reference video picture lists, and two affine motion fields defined by at least two control point motion vectors, denoted CP-MVs, associated to each reference picture, refined CPMVs being obtained as output of the following first step (171) or, of the second step (172) or of the second step (172) that follows the first step (171), wherein the first or second step is/are bypassed according to binary values.

Fig. 17

EP 4 436 184 A1

**Description**

<u>FIELD</u>

The present application generally relates to video picture encoding and decoding. Particularly, but not exclusively, the technical field of the present application is related to inter-predicting of video picture block.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH).** For example, the default CTU size (default CTU height, default CTU width) may equal to 128 **(CTU DW=CTU DH=128).** A default CTU size (height, width) is encoded into the bitstream, for example at a sequence level in the Sequence Parameter Set (SPS).

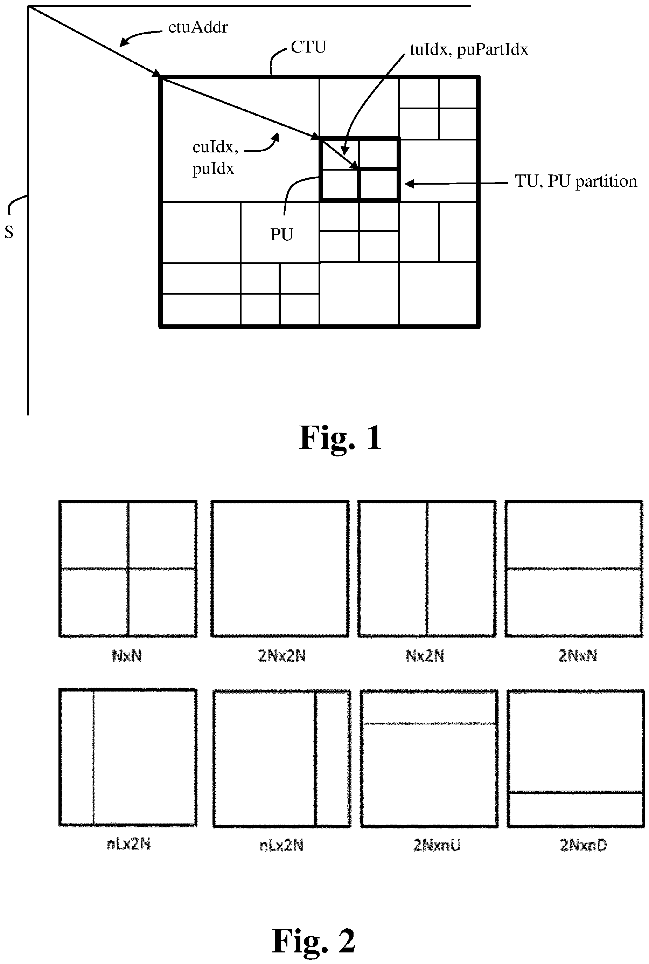

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each leaf is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuIdx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

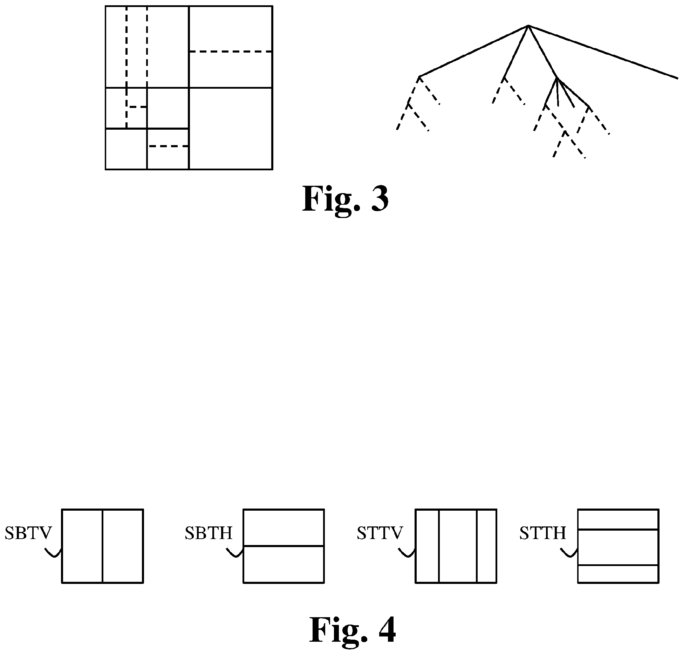

As illustrated on **Figure 3,** in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

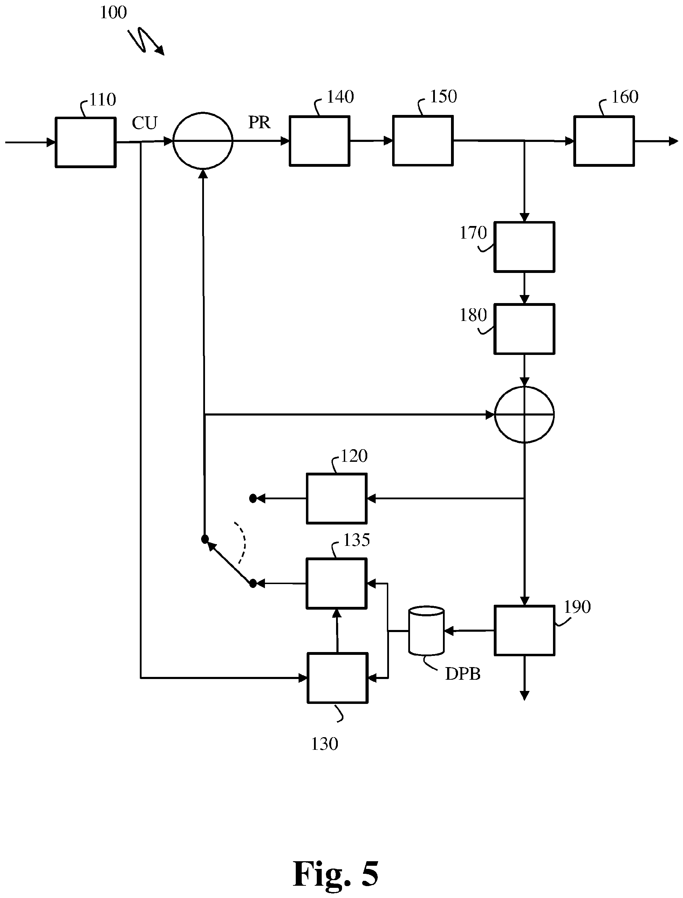

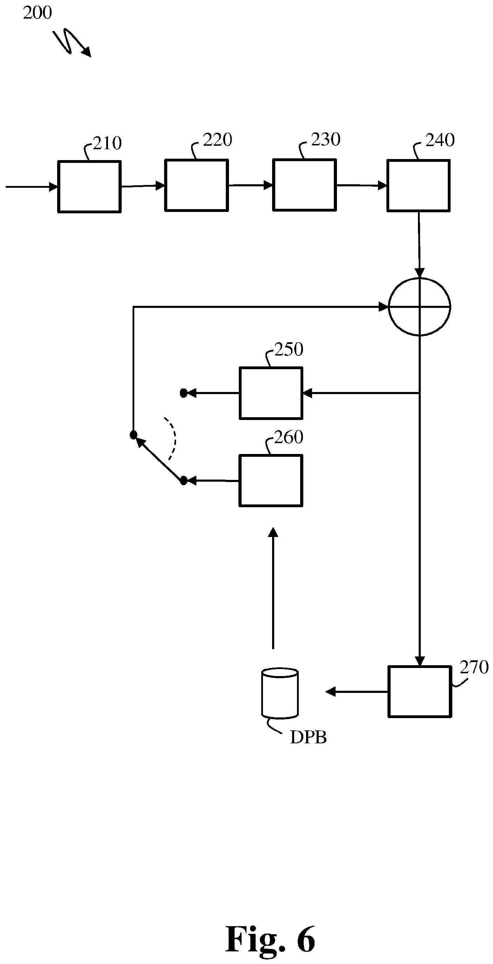

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is inter-prediction data comprising motion information (typically one or more motion vectors and one or more reference video picture indices) associated to the current block and other information used for obtaining a same predicted block at the encoding/decoding side. Next, motion compensation (step 135) obtains a predicted block by means of the motion vector(s) and reference video picture index (indices) determined by the motion estimation step 130. Basically, the block belonging to a selected reference video picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \operatorname*{Argmin}_{p \in P}\{RD_{cost}(p)\} \quad (1)$$

where P is the set of all candidate coding modes for the current block, p represents a candidate coding mode in that set, $RD_{cost}(p)$ is a rate-distortion cost of candidate coding mode p, typically expressed as:

$$RD_{cost(p)} = D(p) + \lambda.R(p)$$

$D(p)$ is the distortion between the current block and a reconstructed block obtained after encoding/decoding the current block with the candidate coding mode p, $R(p)$ is a rate cost associated with the coding of the current block with coding mode p, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks, or the filtered reconstructed blocks form a reference picture that may be stored into a decoded picture buffer (DPB) as above discussed **(Figure 5).**

In step 130/135 of **Figure 5** or step 260 of **Figure 6,** an inter-predicted block is defined from inter-prediction data associated with the current block (CU or a PU of a CU) of a video picture. This inter-prediction data comprises motion information that may be represented (coded) according to the so-called whole-block-based AMVP mode (Adaptive Motion Vector Prediction) or the so-called whole-block-based merge mode.

In HEVC, in the whole-block-based AMVP mode, the motion information used to define an inter-predicted block is represented by up-to 2 reference video picture indices respectively associated to up-to 2 reference video picture lists usually denoted L0 and L1. The reference video picture reference list L0 comprises at least one reference video picture and the reference video picture reference list L1 comprises at least one reference video picture. Each reference video picture index is relative to a temporal prediction of the current block. The motion information further comprises up-to 2 motion vectors, each associated with a reference video picture index of one of the two reference video picture lists. Each motion vector is predictively encoded and signaled into the bitstream, i.e., one motion vector difference MVd is derived from the motion vector and one AMVP (Adaptative Motion Vector Predictor) candidate selected from a whole-block-based AMVP candidate list (built at the encoding and decoding side) and MVd is signaled into the bitstream. The index of a selected AMVP candidate in the whole-block-based AMVP candidate list is also signaled in the bitstream.

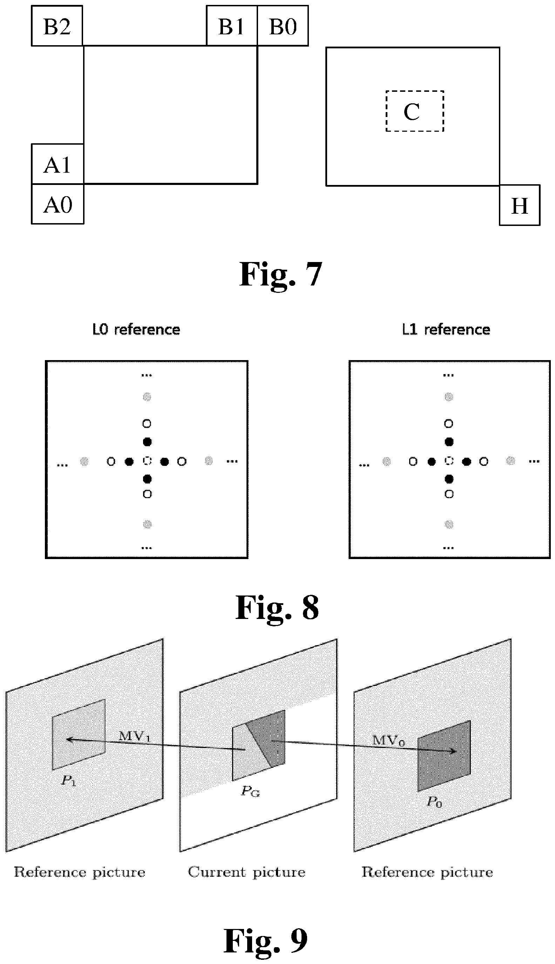

**Figure 7** shows an illustrative example for building a whole-block-based AMVP candidate list used to define an inter-predicted block of a current block of a current video picture.

The whole-block-based AMVP candidate list may comprise two spatial MVP (Motion Vector Predictor) candidates that are derived from the current video picture. A first spatial MVP candidate is derived from motion information associated with inter-predicted blocks, if exist, located at left neighboring positions A0, A1 of the current block, and a second MVP candidate is derived from motion information associated with inter-predicted blocks, if exist, located at top neighboring positions B0, B1 and B2 of the current block. A redundancy check is then conducted between derived spatial MVP candidates, i.e., duplicate derived MVP candidates are discarded. The whole-block-based AMVP candidate list may further comprise a temporal MVP candidate that is derived from motion information associated with a co-located block, if exits, in the reference video picture at spatial position H, or at spatial position C otherwise. The temporal MVP candidate is scaled according to the temporal distances between the current video picture and the reference video picture. Finally, if the whole-block-based AMVP candidate list comprises less than 2 MVP candidates then the whole-block-based AMVP candidate list is padded with zero motion vectors.

In HEVC, in the whole-block-based merge mode, the motion information used to define an inter-predicted block is represented by one merge index of a whole-block-based merge MVP candidate list. Each merge index refers to motion predictor information that indicates which MVP is used to derive the motion information. The motion information is represented by one uni-directional or bi-directional temporal prediction type, up-to 2 reference video picture indices and up-to 2 motion vectors, each associated with a reference video picture index of one of the two reference video picture lists (L0 or L1).

No other information is signaled apart from the merge index. This means the motion vector of current block is set equal to that of the whole block-based MVP candidate indicated by the merge index. Therefore, as opposed to the whole-block-based merge mode, no MVd and no reference picture index is signaled into the bitstream. Only the index of a selected merge candidate in the whole-block-based merge candidate list is also signaled in the bitstream.

Therefore, as opposed to the AMVP mode, no MVd and no reference picture are signaled in the merge mode. Only the merge index is signaled into the bitstream.

The whole-block-based merge MVP candidate list may comprise five spatial MVP candidates that are derived from the current video picture as illustrated on **Figure 7.** A first spatial MVP candidate is derived from motion information associated with an inter-predicted block, if exists, located at left neighboring position A1, a second spatial MVP candidate is derived from motion information associated with an inter-predicted block, if exists, located at above neighboring position B1, a third spatial MVP candidate is derived from motion information associated with an inter-predicted block, if exists, located at above-right neighboring position B0, a forth spatial MVP candidate is derived from motion information associated with an inter-predicted block, if exists, located at left-bottom neighboring position A0 and a fifth spatial MVP candidate is derived from above motion associated with an inter-predicted blocks, if exists, located at left neighboring position B2. A redundancy check is then conducted between derived spatial MVPs, i.e., duplicate derived MVP candidates are discarded. The whole-block-based merge candidate list may further comprise a temporal MVP candidate, named TMVP candidate, that is derived from motion information associated with a co-located block, if exists, in the reference video picture at position H, or at center spatial position "C" otherwise. A redundancy check is then conducted between derived spatial MVPs, i.e., duplicate derived MVP candidates are discarded. Finally, when bi-directional temporal prediction type is used, if the whole-block-based merge candidate list comprises less than 5 MVP candidates, then a combined candidate is added to the whole-block-based merge candidate list. A combined candidate is derived from motion information associated to one reference video picture list and relative to one MVP candidate already present in the whole-block-based merge candidate list, with the motion information associated to another reference video picture list and relative to another MVP candidate already present in the whole-block-based merge candidate list. Finally, if the whole-block-based merge candidate list is still not full (5 merge candidates) then the whole-block-based merge candidate list is padded with zero motion vectors.

Coding the motion information according to VVC provides a richer representation of motion information than in HEVC.

In VVC, motion information may be represented (coded) according to a whole-block-based inter-prediction mode providing a whole-block-based motion representation, or a subblock-based inter-prediction mode providing a subblock-based motion representation.

In VVC, the whole-block-based motion representation may be provided according to either a whole-block-based AMVP mode or a whole-block-based merge mode.

In VVC, in the whole-block-based AMVP mode, the motion information used to define an inter-predicted block is represented as in the HEVC whole-block-based AMVP mode. The whole-block-based AMVP candidate list may comprise spatial and temporal MVP candidates as in HEVC, if exist. The whole-block-based AMVP candidate list may further comprise four additional HMVP (History-Based Motion Vector Prediction) candidates, if exist. Finally, if the whole-block-based AMVP candidate list comprises less than 2 MVP candidates then the whole-block-based AMVP candidate list is padded with zero motion vectors.

HMVP candidates are derived from previously coded MVPs associated with adjacent or non-adjacent blocks relative to the current block. To do so, a table of HMVP candidates is maintained at both encoder and decoder sides and updated on the fly, as a first-in-first-out (FIFO) buffer of MVPs. There are up to five HMVP candidates in the table. After coding one block, the table is updated by appending the associated motion information to the end of the table as a new HMVP candidate. The FIFO rule is applied to manage the table wherein, in addition to the basic FIFO mechanism, the redundant candidate in the HMVP table is firstly removed instead of the first one. The table is reset at each CTU row to enable parallel processing.

Aside from the whole-block-based AMVP candidate list, the whole-block-based AMVP mode employs new tools compared to HEVC which are listed below:

- SMVD (Symmetric Motion Vector Difference): SMVD consists, for a bi-directional block, in setting the MVds associated to one reference video picture list equal to the opposite of the MVd associated to the other reference video picture list for a current block. Moreover, the reference video pictures used in SMVD mode are derived by the decoder with some pre-defined rules. SMVD enables reducing the rate cost for coding MVd and reference picture index information and is selected at block level.

- AMVR (Adaptive Motion Vector Resolution). The AMVR tool allows signaling the MVds with quarter-pel, half-pel, integer-pel or 4-pel luma sample resolutions. This allows saving bits in the coding of MVd information also. In AMVR, the motion vector resolution is chosen at block level.

- BCW (Bi-prediction with coding unit weights) enables bi-prediction of a block with unequal weights, signaled at block level.

Finally, the internal motion vector representation is achieved at 1/16-luma sample accuracy, instead of ¼-luma sample accuracy in HEVC.

In VVC, in the whole-block-based merge mode, the motion information used to define an inter-predicted block is represented as in the HEVC whole-block-based merge mode.

The whole-block-based merge candidate list is different from the whole-block-based merge candidate list used in HEVC.

In VVC, the whole-block-based merge candidate list may be built for MMVD (Merge Mode with MV Difference) mode, GPM (Geometric Partitioning Mode) or CIIP (Combined Intra/Inter Prediction) mode.

MMVD mode allows coding a limited motion vector difference (MVd) on top of a selected merge candidate, to represent the motion information associated with an inter-predicted block. MMVD coding is limited to 4 vector directions and 8 magnitude values, from ¼ luma sample to 32-luma sample as illustrated on **Figure 8.** MMVD mode provides an intermediate accuracy level, hence an intermediate trade-off between rate cost and MV (Motion Vector) accuracy to signal the motion information.

GPM consists in partitioning a current block PG into two motion partitions MV0 and MV1 along a straight line as illustrated on **Figure 9.** Each motion vector MV0 and MV1 points to a block P0, P1 of a reference video picture of one of the two reference video pictures lists.

The geometric partition may be non-rectangular or rectangular. If rectangular, an asymmetric splitting is done, avoiding redundancy with CU-level binary splitting. The use of GPM is signalled with a CU-level flag as a particular whole-block-based merge mode.

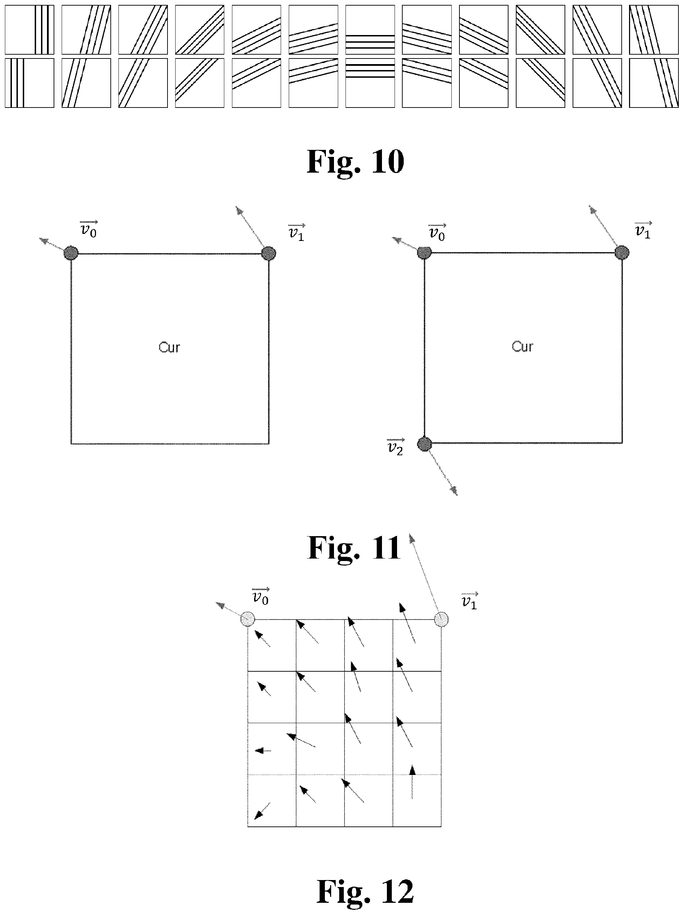

The split line orientation and position relative to the current block center is signaled at CU level through a dedicated GPM index. In total 64 partitions are supported by geometric partitioning mode for each possible CU size $w \times h = 2^m \times 2^n$ with $m,n \in \{3...6\}$ excluding 8x64 and 64x8. For instance, **Figure 10** illustrates various split lines that can be achieved, at different position offsets from the CU center, and for various split line angles.

Each part of a geometric partition in the current block PG is inter-predicted using its own motion. Only uni-prediction is allowed for each partition, that is, each part has one motion vector and one reference video picture index. The uni-directional inter-prediction constraint is applied to ensure that only two motion compensated predictions are needed for each current block PG, similarly to the conventional bi-directional inter-prediction.

The motion vector MV0 and MV1 of each partition is derived from two merge indices, respectively for each partition.

After predicting each of part of the geometric partition, the sample values along the geometric partition edge are adjusted using a blending processing with adaptive weights. This is the prediction signal for the whole current block PG and transform and quantization process will be applied to the whole current block PG (not for each partition) as in other whole-block-based prediction modes.

CIIP consists in a combining an inter-prediction signal with an intra-prediction signal to predict a current block. The inter-prediction signal in the CIIP mode is derived using the same inter-prediction process as applied to the whole-block-based merge mode; and the intra-prediction signal is derived following a regular intra-prediction process with a planar mode. Then, the intra and inter prediction signals are combined using weighted averaging, where the weight value is calculated depending on the coding modes of the top and left neighbouring blocks:

$$PCIIP = (Wmerge \times Pmerge + Wintra \times Pintra + 2) \gg 2$$

The sums of weights $W_{merge}$ and $W_{intra}$ is equal to 4 and these weights are constant in the whole current block.

In summary, in VVC, the whole-block-based merge candidate list may comprise spatial MVP candidates similar to HEVC except the two first candidates are swapped : candidate B1 is considered before candidate A1 during the whole-block based merge candidate list construction. The whole-block-based merge candidate list may further comprise TMVP similarly to HEVC, HMVP candidates as in the VVC AMVP mode. Several HMVP candidates are inserted into the whole-block-based merge candidate list so that the merge candidate list reaches the maximum allowed number of MVP candidates (minus 1). The whole-block-based merge candidate list may also comprise up-to 1 pairwise average candidates computed as follows: the two first merge candidates present in the whole-block-based merge candidate list are considered and their motion vectors are averaged. This averaging is computed separately for each reference video picture list L0 and L1. So, if both MVP are bi-directional, motion vectors related to both lists L0 and L1 are averaged. If only one motion vector is present in a reference video picture list, it is taken as is to form the pairwise candidate. Finally, if the merge candidate list does not reach the maximum allowed number of MVP candidates, then the whole-block-based merge candidate list is padded with zero motion vectors.

In VVC, the subblock-based inter-prediction basically consists in dividing the current block into subblocks, typically into 4x4 or 8x8 luma samples subblocks, and the subblock-based motion representation used to define an inter-predicted block is represented by motion information associated with all the subblocks.

In HEVC, only translation motion model is applied for motion compensated temporal prediction. Such translational motion is not able to capture some types of motion like zoom in, zoom out, rotation, perspective motions and irregular motions.

To solve this problem, in VVC, subblock-based affine motion mode can be used at CU level. As shown on **Figure 11,** the affine motion field of a current block is defined from translational motion vectors of two control points (4-parameter affine motion model) or three control points (6-parameter affine motion model). On **Figure 11,** the translational motion vectors $v_0$, $v_1$; $v_2$ of control points located at corners of the current block are used to derive the affine motion field of a current block.

For the 4-parameter affine motion model, motion vector $(mv_x, mv_y)$ at sample location $(x, y)$ in a current block is derived as:

$$\begin{cases} mv_x = \frac{mv_{1x}-mv_{0x}}{W}x + \frac{mv_{0y}-mv_{1y}}{W}y + mv_{0x} \\ mv_y = \frac{mv_{1y}-mv_{0y}}{W}x + \frac{mv_{1x}-mv_{0x}}{W}y + mv_{0y} \end{cases} \qquad (2)$$

where $(mv_{0x}, mv_{0y})$ is the translational motion vector of the top-left corner control point, and $(mv_{1x}, mv_{1y})$ is the motion vector of the top-right corner control point.

For the 6-parameter affine motion model, motion vector at sample location (x, y) in a 4x4 subblock of the current block is derived as:

$$\begin{cases} mv_x = \frac{mv_{1x}-mv_{0x}}{W}x + \frac{mv_{2x}-mv_{0x}}{H}y + mv_{0x} \\ mv_y = \frac{mv_{1y}-mv_{0y}}{W}x + \frac{mv_{2y}-mv_{0y}}{H}y + mv_{0y} \end{cases} \qquad (3)$$

where $(mv_{0x}, mv_{0y})$ is the translational motion vector of the top-left corner control point, $(mv_{1x}, mv_{1y})$ is the translational motion vector of the top-right corner control point, and $(mv_{2x}, mv_{2y})$ is the translational motion vector of the bottom-left corner control point. Parameters $\frac{mv_{1x}-mv_{0x}}{W}$, $\frac{mv_{2x}-mv_{0x}}{H}$, $\frac{mv_{1y}-mv_{0y}}{W}$ and $\frac{mv_{2y}-mv_{0y}}{H}$ represent the non-translation parameters (rotation, scaling).

To derive motion vector of each subblock (usually luma subblock) of the current block, the motion vector of the center sample of each subblock is calculated according to equations 1 or 2, as shown in **Figure 12,** and rounded to 1/16 fraction accuracy. Then, motion compensation interpolation filters are applied to generate a prediction of each subblock with derived motion vector leading to an inter-prediction of the current block. The subblock size in chroma-components is also 4×4. The MV of a 4×4 chroma subblock is calculated as the average of the MVs of the top-left and bottom-right luma subblocks in the collocated 8x8 luma region.

In the following, a transactional motion vector of a control point is named CPMV (Control Point Motion Vector).

The sub-block-based motion representation used to define an inter-predicted block may be provided according to a subblock-based affine AMVP mode or a subblock-based affine merge mode.

The subblock-based affine merge mode can be applied for a current block with both width and height larger than or equal to 8. An affine merge candidate list of up-to 5 subblock-based motion candidates is used. Subblock-based motion candidates are CPMVP candidates based on motion information associated with spatial neighboring blocks. An index of a selected subblock-based motion candidate of the affine merge candidate list is signalled into the bitstream. Finally, if the affine merge candidate list is not full (5 CPMVP candidates) then the affine merge candidate list is padded with zero motion vectors.

CPMVP candidates may be either so-called inherited CPMVP candidates that are derived by extrapolating affine motion model (CPMVs) of neighbour blocks or so-called constructed CPMVP that are CPMVP candidates derived by combining translation MVs of neighbour subblocks.

In VVC, there are at most two inherited CPMVP candidates, which are derived by extrapolating affine motion model of a left neighbour block and affine model of an above neighbour block. For the left CPMVP candidate, if an affine motion model of the left neighbour A0 exists, the left CPMVP candidate is extrapolated from CPMVs of said affine motion model. Otherwise, the left CPMVP candidate is extrapolated from CPMVs of the affine motion model of the left neighbour A1 if exists. For the above CPMVP candidate, if the affine motion model of the above neighbour B0 exists, the above CPMVP candidate is extrapolated from CPMVs of said affine motion model. Otherwise, if the affine motion model of the above neighbour B1 exists, the above CPMVP candidate is extrapolated from CPMVs of said affine motion model. Otherwise, the CPMVP candidate is extrapolated from CPMVs of the affine motion model of the left neighbour B2 if exists.

Extrapolating affine motion models of neighbour blocks means deriving inherited CPMVP candidates by combining CPMVs of said affine motion models.

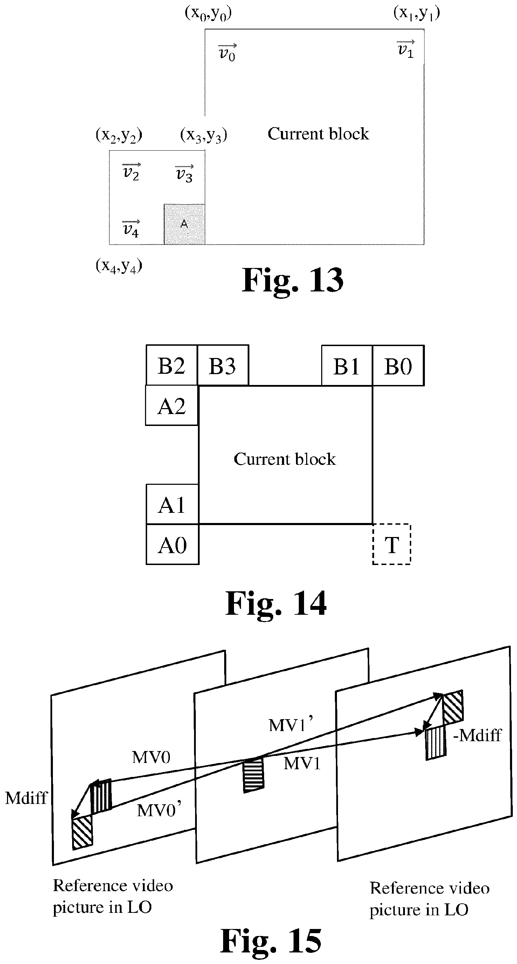

As shown in **Figure 13,** if an affine motion model of a left-bottom neighbor subblock A exists, the translational motion vectors $v_2$, $v_3$ and $v_4$ of said affine motion model that are relative to the top left corner, above-right corner and left-bottom corner of a neighbor block which contains the subblock A are attained. When subblock A is coded with the above 4-parameter affine model, the left CPMVP candidate of the current block is inherited (calculated) by combining the translational motion vectors $v_2$, and $v_3$, according to the two following equations.

$$\vec{v_0} = \vec{v_2} + (\vec{v_4} - \vec{v_2})\left(\frac{Y_{curr} - Y_{neighb}}{H_{neighb}}\right) \\ + (\vec{v_3} - \vec{v_2})\left(\frac{X_{curr} - X_{neighb}}{W_{neighb}}\right)$$

$$\vec{v_1} = \vec{v_0} + (\vec{v_3} - \vec{v_2})\left(\frac{W_{curr}}{W_{neighb}}\right)$$

where $(X_{curr}, Y_{curr})$ is the position of current block, $(X_{neighb}, Y_{neighb})$ is the position of the neighboring block, and $(W_{neighb}, H_{neighb})$ is the size of the neighboring block.

In case that subblock A is coded with the above 6-parameter affine model, the three CPMVs of the current block are calculated by combining the translational motion vectors $v_2$, $v_3$ and $v_4$ according to the following equations.

$$\vec{v_0} = \vec{v_2} + (\vec{v_4} - \vec{v_2})\left(\frac{Y_{curr} - Y_{neighb}}{H_{neighb}}\right) + (\vec{v_3} - \vec{v_2})\left(\frac{X_{curr} - X_{neighb}}{W_{neighb}}\right)$$

$$\vec{v_1} = \vec{v_0} + (\vec{v_3} - \vec{v_2})\left(\frac{W_{curr}}{W_{neighb}}\right)$$

$$\vec{v_2} = \vec{v_0} + (\vec{v_4} - \vec{v_2})\left(\frac{H_{curr}}{H_{neighb}}\right)$$

In VVC, constructed affine candidates are derived by combining non-affine MVs of neighbor blocks. MVs of control points are derived from spatial and temporal neighbor subblocks.

**Figure 14** shows an example for deriving constructed CPMVP candidates by combining translational MVs of neighbor blocks.

$CPMV_k$ (k=1, 2, 3, 4) represents the translational MV associated with a k-th control point of the current block. For $CPMV_1$, if the translational MV of the neighbor subblock B2 exists, $CPMV_1$ equals said translation MV. Otherwise, if the translational MV of the neighbor subblock B3 exists, $CPMV_1$ equals said translation MV. Otherwise, if the translational MV of the neighbor subblock A2 exists, $CPMV_1$ equals said translation MV. For $CPMV_2$, if the translational MV of the neighbor subblock B1 exists, $CPMV_2$ equals said translation MV. Otherwise, if the translational MV of the neighbor subblock B0 exists, $CPMV_2$ equals said translation MV. For $CPMV_3$, if the translational MV of the neighbor subblock A1 exists, CPMVs equals said translation MV. Otherwise, if the translational MV of the neighbor subblock A0 exists, CPMVs equals said translation MV. For $CPMV_4$, if the translational MV of a co-located neighbor subblock in a reference video picture at position T exists, $CPMV_4$ equals said translation MV.

Constructed CPMVP candidates are derived by combining $CPMV_k$ as follows: if $CPMV_1$, $CPMV_2$ and CPMVs exist, the constructed CPMVP candidate is derived by combining {$CPMV_1$, $CPMV_2$, $CPMV_3$}. Otherwise, if $CPMV_1$, $CPMV_2$ and $CPMV_4$ exist, the constructed CPMVP candidate is derived by combining {$CPMV_1$, $CPMV_2$, $CPMV_4$}. Otherwise, if $CPMV_1$, CPMVs and $CPMV_4$ exist, the constructed CPMVP candidate is derived by combining {$CPMV_1$, $CPMV_3$, $CPMV_4$}. Otherwise, if $CPMV_2$, CPMVs and $CPMV_4$ exist, the constructed CPMVP candidate is derived by combining {$CPMV_2$, $CPMV_3$, $CPMV_4$}. Otherwise, if $CPMV_1$ and $CPMV_2$ exist, the constructed CPMVP candidate is derived by combining {$CPMV_1$, $CPMV_2$}. Otherwise, if $CPMV_1$ and CPMVs exist, the constructed CPMVP candidate is derived by combining {$CPMV_1$, $CPMV_3$}.

To avoid motion scaling in case $CPMV_k$s point to different reference video pictures, combinations of control point MVs associated with said $CPMV_k$s are discarded.

Combining 3 $CPMV_k$s leads to a 6-parameter affine motion model (equation 2) and combining of 2 CPMVs leads to a 4-parameter affine motion model (equation 1).

The subblock-based affine merge mode uses an affine merge candidate list of CPMVP candidates. A merge index *mergeIdx* indicates the CPMVP candidate used to derive the motion information of a current block. A best CPMVP candidate in the affine merge candidate list is determined for the current block, as the one which minimizes the rate distortion costs for the coding of a given block.

The affine merge candidate list may comprise SbTMVP (subblock-based Temporal Motion Vector Prediction) candidate and/or inherited CPMVP candidates and/or constructed CPMVP candidates as discussed above. Finally, if the affine merge candidate list does not reach a maximum allowed number of candidates, then the affine merge candidate list is padded with zero motion vectors.

SbTMVP candidate may be derived as follows: similar to TMVP candidate, SbTMVP candidate is derived from motion information of co-located subblock, if exists, in a reference video picture. SbTMVP candidate differs from TMVP candidate in the following two main aspects:

- TMVP predicts motion at CU-evel, but SbTMVP predicts motion at subblock level (sub-CU-level);

- TMVP fetches the temporal motion vectors from the co-located block in the reference video picture, SbTMVP applies a motion shift before fetching the temporal motion information from the reference video picture, where the motion shift is obtained from the motion vector from one of the spatial neighboring subblocks of the current block.

The subblock-based affine AMVP mode can be applied for current blocks with both width and height larger than or equal to 16 in VVC. In subblock-based affine AMVP mode, CPMV differences Mvds between MVs of control points located at corners of the current block and their CPMVPs (Control Point Motion Vector Predictors) are signaled into the bitstream. Finally, a CPMVP index referring to a CPMVP candidate of an affine AMVP candidate list is signaled into the bitstream.

The CPMVPs used to predict the MVs of control points located at corners of the current block are derived from the affine AMVP candidate list comprising two CPMVP candidates.

The affine AMVP candidate list may comprise inherited CPMVP candidates and/or constructed CPMVP candidates.

In the ECM ("Algorithm description of Enhanced Compression Model 7 (ECM 7)", M. Coban, F. Le L6annec, R.-L. Liao, K. Naser, J. Ström, L. Zhang, Document JVET-AB2025, Joint Video Experts Team (JVET) of ITU-T SG 16 WP 3 and ISO/IEC JTC 1/SC 29, 28th Meeting, Germany, 21-28 October 2022, https://jvet-experts.org/doc_end_user/documents/28_Mainz/wg11/JVET-AB2025-v1.zip), the motion information used to define an inter-predicted block may also be represented according to the so-called Bilateral Matching AMVP-merge mode (BM-AMVP-merge mode).

The BM-AMVP-merge mode is allowed when at least one reference video picture is available in one reference picture list (along one so-called inter-direction) of the video picture comprising the current block and at least one reference video picture is available in the other reference picture list (along another inter-direction) of the video picture. In the BM-AMVP-merge mode, the motion information used to define an inter-predicted block comprises a first motion information associated with a reference video picture of a reference video picture list, and a second motion information associated with a reference video picture of another reference video picture list.

In the BM-AMVP-merge mode as defined in ECM, the first motion information is a first whole-block-based motion vector (MV) associated with a reference video picture of a reference video picture list associated with an inter-direction and the second motion information is a second whole-block-based MV associated with a reference video picture of another reference video picture list associated with the other inter-direction.

The first whole-block-based MV is represented as discussed above in relation with the whole-block-based AMVP mode in VVC, thus is derived from a whole-block-based motion vector predictor (MVP), a signaled reference picture index and a signaled motion vector difference, obtained through the whole-block-based AMVP mode.

The second whole-block-based MV is represented as discussed above in relation with the whole-block-based merge mode, thus is derived from the whole-block-based motion vector predictor (MVP) obtained through the whole-block-based merge mode.

The whole-block-based MVP used to derive the second whole-block-based MV (i.e., a mergeIdx index in the whole-block-based merge MVP candidate list indicated by refListMerge index) is derived from the following bilateral matching method which minimizes a bilateral matching cost Bmcost given by:

$$mergeIdx = \underset{mIdx \ in \ merge \ list}{\operatorname{ArgMin}} \left( Bmcost(MvpIdx[refListAmvp], mIdx[refListMerge]) \right)$$

where *mIdx[refListMerge]* is an index that refers to an MVP candidate of the whole-block-based merge MVP candidate list indicated by refListMerge index, and MvpIdx[refListAmvp] is the whole-block-based MVP used to predict the first whole-block-based MV of the BM-AMVP-merge mode.

For every MVP candidate in the whole-block-based merge MVP candidate list, the bilateral matching cost is calculated using said MVP candidate and MvpIdx[refListAmvp]. The MVP candidate with the smallest cost is selected as being the whole-block-based MVP used to derive the second whole-block-based MV.

In VVC in order to increase the accuracy of the MVs of the merge mode, a bilateral matching (BM) based decoder side motion vector refinement method, denoted DMVR method, is applied to the current block with the motion vectors derived through the whole-block based AMVP mode (MV0 on **Figure** 15) and the second whole-block-based MV (MV1 on **Figure** 15) derived through the whole-block-based merge mode, as starting points. Its principle is the following one. In bi-prediction operation, refined motion vectors MV0' and MV1' are derived around the two initial motion vectors MV0 and MV1 pointing to reference blocks of reference video pictures of the reference video picture lists L0 and L1, by minimizing the bilateral matching cost between the two reference blocks (minimizing the motion vector difference Mdiff). Basically, local search is to derive a MV refinement offset *MV_offset.* The local search typically applies a n×n (n is an integer value) square search pattern to loop through a search range [-sHor, sHor] in horizontal direction and [-sVer, sVer] in vertical direction. The bilateral matching cost (BM cost) is calculated as a sum of mvDistanceCost and sadCost, where mvDistanceCost is representative of a motion vector coding cost and increases as a function of the motion vector magnitude and sadCost is a metrics providing differences between the two reference blocks. For example, sadCost is a sum of absolute difference (SAD) of samples of said two reference blocks. When the BM cost at the center point of the n×n search pattern has the minimum cost, the local search is terminated. Otherwise, the current minimum cost search point becomes the new center point of the n×n search pattern and continue to search for the minimum cost, until it reaches the end of the search range.

In DVMR, the search points are surrounding the initial MV and the MV refinement offset obey the MV difference mirroring rule. In other words, any points that are checked by DMVR, denoted by candidate MV pair (MV0, MV1) obey the following two equations:

$$MV0' = MV0 + MV\_offset \qquad\qquad (4)$$

$$MV1' = MV1 - MV\_offset \qquad\qquad (5)$$

where *MV_offset* represents the MV refinement offset between the initial MV and the refined MV in one of the reference pictures.

The DMVR searching includes an integer sample offset searching step (first step of DMVR) followed by a fractional refinement step (second step of DMVR). The refinement search range is two integer luma samples from the initial MV.

The refined MV derived by DMVR method is used to generate the inter prediction samples and also used in temporal motion vector prediction for future pictures coding. While the original MV is used in deblocking process and also used in spatial motion vector prediction for future CU coding.

In VVC, 25 points full search is applied for the first step of the DMVR method. The BM cost of the initial MV pair is first calculated. If the BM cost of the initial MV pair is smaller than a threshold, the first step of the DMVR method is terminated. Otherwise, BM costs of the remaining 24 points are calculated and checked in raster scanning order. The searching point with the smallest BM cost is selected as the output of the first step of the DMVR method.

To reduce the penalty of the uncertainty of DMVR refinement, it is proposed to favor the original MV during the DMVR process. The SAD between the reference blocks referred by the initial MV candidates is decreased by 1/4 of the SAD value.

To save the calculational complexity, the second step of the DMVR method is derived by using parametric error surface equation, instead of additional search with SAD comparison. The fractional sample refinement is conditionally invoked based on the output of the first step of the DMVR method. When the first step of the DMVR method is terminated with center having the smallest SAD in either the first iteration or the second iteration of first step of the DMVR method, the fractional sample refinement (second step of the DMVR method) is further applied.

In parametric error surface based sub-pixel offsets estimation, the center position BM cost and the BM costs at four neighboring positions from the center are used to fit a 2-D parabolic error surface equation of the following form:

$$E(x, y) = A(x - x_{min})^2 + B(y - y_{min})^2 + C \qquad (6)$$

where $(x_{min}, y_{min})$ corresponds to the fractional position with the least BM cost and C corresponds to the minimum BM cost value. By solving the above equations by using the BM cost value of the five search points, the $(x_{min}, y_{min})$ is computed as:

$$x_{min} = (E(-1,0) - E(1,0))/(2(E(-1,0) + E(1,0) - 2E(0,0))) \qquad (7)$$

$$y_{min} = (E(0,-1) - E(0,1))/(2((E(0,-1) + E(0,1) - 2E(0,0))) \qquad (8)$$

The value of $x_{min}$ and $y_{min}$ are automatically constrained to be between - 8 and 8 since all BM cost values are positive, and the smallest value is E(0,0). This corresponds to half peal offset with 1/16th-pel MV accuracy in VVC. The computed fractional $(x_{min}, y_{min})$ are added to the integer distance refinement MV to get the sub-pixel accurate refinement delta MV.

In VVC, the application of DMVR is restricted and is only applied for the CUs that fulfill one particular DMVR conditions.

A DMVR condition is fulfilled when CUs are coded with one of the following coding modes and features:

- CU level merge mode with bi-prediction MV ;

- One reference picture is in the past and another reference picture is in the future with respect to the current picture ;

- The distances (i.e., POC difference) from two reference pictures to the current picture are same ;

- Both reference pictures are short-term reference pictures;

- CU has more than 64 luma samples ;

- Both CU height and CU width are larger than or equal to 8 luma samples;

- BCW weight index indicates equal weight;

- Weighted Prediction (WP) is not enabled for the current block; Weighted prediction allows to combine a multiplicative weighting factor and an additive offset are applied to the motion-compensated prediction. ("Weighted prediction in the H.264/MPEG AVC video coding standard", J.M. Boyce, May 2004, 10.1109/iscas.2004.1328865).

- CIIP mode is not used for the current block.

In VVC, the resolution of the MVs is 1/16 luma samples. The samples at the fractional position are interpolated using an 8-tap interpolation filter. In DMVR, the search points are surrounding the initial fractional-pel MV with integer sample offset, therefore the samples of those fractional position need to be interpolated for DMVR search process. To reduce the calculation complexity, the bi-linear interpolation filter is used to generate the fractional samples for the searching process in DMVR. Another important effect is that by using bi-linear filter is that with 2-sample search range, the DVMR does not access more reference samples compared to the normal motion compensation process. After the refined MV is attained with DMVR search process, the normal 8-tap interpolation filter is applied to generate the final prediction. In order to not access more reference samples to normal MC (Motion Compensation) process, the samples, which is not needed for the interpolation process based on the original MV but is needed for the interpolation process based on the refined MV, will be padded from those available samples.

When the width and/or height of a CU are larger than 16 luma samples, it is further split into subblocks with width and/or height equal to 16 luma samples. The maximum unit size for DMVR searching process is limit to 16x16.

In ECM, DMVR is applied to affine merge coded blocks when DMVR condition is fulfilled. This is the so-called affine DMVR. The first step of affine DMVR (integer sample offset searching step) is applied to the translation part of the affine motion (equation 3) such that a translation MV offset is added to all the CPMVs of the candidate in the affine merge list if the candidate meets the DMVR condition. The MV offset is derived by minimizing the BM cost which is the same as conventional DMVR.

The affine DMVR consists of 3x3 square search pattern (8 search points) used to loop through the search range which is set as [-3, 3] to find the best integer MV refinement offset (first step of affine DMVR).

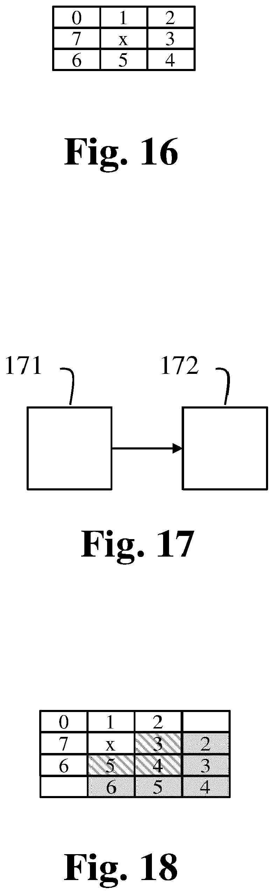

**Figure 16** shows an example of scheme and search points order used by the affine DMVR method. The cross x denotes the initial position of a search and position 0,...,7 denotes all the eight positions of search points.

Then, fractional refinement (second step of affine DMVR) is conducted around the best integer position and an error surface estimation is performed at last to find an optimal MV refinement offset with 1/16 precision.

In affine DMVR, there is no favor to the original MV, and all search points are evaluated.

In JVET contribution JVET-AB0178 (https://jvet-experts.org/doc_end_user/documents/28_Mainz/wg11/JVET-AB2028-v1.zip) CPMV refinement for affine DMVR is proposed to further improve affine DMVR, wherein a different MV refinement offset may be applied to different CPMVs.

The method as described in JVET-AB0178 may be applied in merge candidate of affine merge mode and affine MMVD mode.

**Figure 17** illustrates schematically a block diagram of the steps of a CPMV refinement method as described in JVET-AB0178.

CPMV refinement method follows an affine DMVR method as described in prior art.

In a first step 171, for each control-point motion vector initCpMvLX[cpIdx] with cpIdx=0..numCpMv - 1 and wherein numCpMv is the number of CPMVs of the current affine coding block, the method performs bilateral matching for a block that centered by the control-points to derive refined CPMVs bm RefinedCpMvLx[cpIdx].

Next, loop over combinations of initCpMvLX[cpIdx] and bmRefinedCpMvLx[cpIdx], derive the best set of CPMVs that minimize the BM cost of the current block.

In the second step 172, optional, the CPMVs of the best set of CPMVs are iteratively refined to further minimize the BM cost of the current block following the principles of the second step of affine DMVR. In each iteration, one single CPMV is refined while the others are fixed.

The method of **Figure 17** is advantageous because it improves the compression efficiency of state-of-the-art video codecs.

However, the drawback is that the obtained trade-off between compression efficiency improvement and the increase in encoder and decoder complexity is not so attractive, because the method implies significant codec complexity increase.

The goal of the present invention is to improve the trade-off between compression efficiency increase and encoding time overhead of the CPMV refinement method as proposed in JVET-AB0178.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of decoding a video picture by means of motion compensated temporal bi-prediction of an inter coded block using two reference video pictures in two separate reference video picture lists, and two affine motion fields defined by at least two control point motion vectors, denoted non-refined CPMVs, associated to each reference picture, refined CPMVs being obtained as output of a first step or as output of a second step or as output of a combination of the first step followed by the second step,

- in said first step, for each non-refined CPMV, deriving at least two refined CPMVs at up to a sub-sample precision by performing a bilateral matching for a block centred on the non-refined CPMV, and deriving a set of CPMVs comprising either non-refined and/or refined CPMVs at up to a sub-sample precision to lead to an overall predicted block with a minimum bilateral matching cost,
- in said second step, for each non-refined CPMV or each CPMV of the selected set of CPMVs that is associated with a block, deriving a refined CPMV for said non-refined CPMV or said CPMV of the selected set of CPMVs at up to a sub-sample precision to minimize a bilateral matching cost of said block, wherein the first step is bypassed when a first binary value equals a first value, and executed when said first binary value equals a second value, and the second step is bypassed when a second binary value equals a first value, and executed when said second binary value equals a second value.

In one variant, the first and second binary values are signaled in a video parameter set of a bitstream carrying video data to indicate whether the first, respectively, the second step is enabled.

In one variant, the first and second binary values are signaled in a sequence parameter set of a bitstream carrying video data to indicate whether the first, respectively, the second step is enabled for a whole video sequence.

In one variant, the first and second binary values are signaled in a picture parameter set of a video bitstream to indicate whether the first, respectively, the second step is enabled for video pictures referring to said picture parameter set.

In one variant, the first and second binary values are signaled in an adaptation parameter set of a video bitstream to indicate whether the first, respectively, the second step is enabled for video pictures referring to said adaptation parameter set.

In one variant, when the first or the second value is signaled in a video parameter set, in a sequence parameter set, in a picture parameter set or in an adaptation parameter set, a binary value of a slice header of a slice of a video bitstream signals whether the second or first step is enabled for a video picture.

In one variant, the first and/or second binary values is/are enabled/disabled according to a video characteristics or video picture characteristics.

In one variant, the first step is disabled when width and height of the inter-coded block are higher than a first threshold, when the width of the inter-coded block equals the height of the inter-coded block, and when a resolution of the video picture is higher than a maximal resolution.

In one variant, the first step is disabled when width and height of the inter-coded block is higher than a first threshold, and when the width of the inter-coded block equals the height of the inter-coded block.

In one variant, the second step is disabled when width and height of the inter-coded block are higher than a second threshold and when a video picture contains more than a given number of pixels.

In one variant, the second step is disabled when width and height of the inter-coded block is higher than a third threshold and when the width of the inter-coded block equals the height of the inter-coded block.

In one variant, the first and/or second step is disabled for the video picture with a temporal layer higher or equals to a third value.

According to a second aspect of the present application, there is provided a system comprising means for performing one of the methods according to the first aspect of the present application.

According to a third aspect of the present application, there is provided a computer program product including instructions which, when the program is executed by one or more processors, causes the one or more processors to carry out a method according to the first and/or second aspect of the present application.

According to a fourth aspect of the present application, there is provided a non-transitory storage medium carrying instructions of program code for executing a method according to the first and/or second aspect of the present application. The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** shows an illustrative example for building a whole-block-based AMVP candidate list used to define an inter-predicted block of a current block of a current video picture;

**Figure 8** shows an example of limited motion vector differences in accordance with prior art;

**Figure 9** shows an example of geometric partitioning of a video picture block in accordance with prior art;

**Figure 10** shows examples of geometric block partitioning in accordance with prior art;

**Figure 11** shows an example of representation of an affine motion field of a video picture block in accordance with prior art;

**Figure 12** shows an example of motion vectors associated with subblocks of a video picture block in accordance with prior art;

**Figure 13** shows examples for deriving an affine motion model from translational motion vector relative to control points located at corners of a video picture block in accordance with prior art;

**Figure 14** shows an example for deriving constructed CPMVP candidates by combining translational MVs of neighbor blocks in accordance with prior art;

**Figure 15** shows an illustration of a bilateral matching refinement method in accordance with prior art;

**Figure 16** shows an example of scheme and search points order used by the affine DMVR;

**Figure 17** illustrates schematically a block diagram of the steps of a CPMV refinement method as described in JVET-AB0178;

**Figure 18** shows positions of searching points in accordance with the prior art;

**Figure 19** shows an example of a typical inter-frame prediction structure that is used in the context of HEVC, VVC or ECM;

**Figure 20** shows an example of syntax to signal the activation or deactivation of the two steps 171 and 172 at different levels in accordance with exemplary embodiments of the present invention;

**Figure 21** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspect relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A tile is a sequence of CTUs that covers a rectangular picture area of a video picture. The CTUs in a tile are usually scanned in raster scan order within that tile. The tile size (width and height) is an integer multiple of the default CTU size (default CTU width and default CTU height).

A slice comprises an integer number of tiles or an integer number of consecutive complete CTU rows within a tile. Consequently, each vertical slice boundary is always also a vertical tile boundary. It is possible that a horizontal boundary of a slice is not a tile boundary but consists of horizontal CTU boundaries within a tile; this occurs when a tile is split into multiple rectangular slices, each of which consists of an integer number of consecutive complete CTU rows within the tile. The slice size (width and height) is an integer multiple of the default CTU size (default CTU width and default CTU height).

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

Generally speaking, the present application relates to various exemplary embodiments to reduce the complexity of the CPMV refinement method of JVET-AB0178, while preserving the compression efficiency obtained with JVET-AB0178 as much as possible.

In one first exemplary embodiment, the MV/CPMV refinement search is optimized by storing systematically the results of the affine DMVR i.e., the obtained best MVs and the lowest BM cost (output of the first or second step of the affine DMVR method).

In the ECM, in second step of affine DMVR and steps 171 and 172, the affine DMVR searching scheme is processed and sometimes repeated several times to improve the compression efficiency by selecting the MVs that provide the BM cost. When repeated several times, the second step of affine the DMVR method can be skipped if the previous iteration does not provide any better solution.

When using several iterations of the affine DMVR searching scheme, the initial MV and the best BM cost are updated with the best results (best CPMVs and best BM cost) obtained at the previous iterations.

Let's suppose position 0 is the best position. **Figure 18** shows the positions that will be evaluated in the next iteration. Positions corresponding to grey shaped rectangles are the evaluated positions of the previous iteration. Positions corresponding to hashed rectangles are the evaluated positions of the previous iteration that will be reused in the current iteration. Positions 0, 1, 2, 7 and, 6 will be evaluated in the new iteration.

In the ECM, in the case of multiple iterations of the refinement process are triggered, the result of an iteration (best MVs/CPMVs and the lowest distortion) are stored (saved) only if it's the first iteration. By processing like that, when this refinement is coupled with other algorithms, other following algorithms are not initialized with the best identified MVs/CPMVs or do not use the lowest achieved BM cost.

According the first exemplary embodiment, the results (best MVs and the lowest BM cost) are systematically stored after each iteration of the first of second step of the affine DMVR method.

In one second exemplary embodiment, the search scheme can be divided into two kinds of positions:

- main positions which may be for example left, top, right and, bottom, i.e., positions {1, 3, 5, 7} in **Figure 16.**

- corner positions which may be for example top left, top right, bottom right, and bottom left, i.e., positions {0, 2, 4, 6} in **Figure 16.**

According to the second exemplary embodiment, main positions are evaluated first and next corner positions are evaluated accordingly to the results of adjacent positions of said corner positions.

In one first variant of the second exemplary embodiment, the evaluation of an adjacent position of a corner position is skipped if none of the adjacent positions of said corner position is the current best position.

For example, the evaluation of position 0 (corner position) can be processed according to the results of positions 1, 7 and the initial position x (adjacent positions of the corner position 0) in **Figure 16.** The probability that the position 0 is the best position is low, if neither position 1, position 7, nor the initial position x are the iteration's current best position. In this case, it is beneficial to skip the evaluation of position 0 to save run times.

In a second variant of the second exemplary embodiment, a corner position is evaluated if BM costs of both adjacent positions of said corner position are in a given range of the current best BM cost.

The range can be defined from 0 to best distortion weighted by a factor strictly superior to one.

For example, let's consider that position 7 (adjacent position of the corner position 0) is the best position. Using the first variant of the second exemplary embodiment, positions 2 and 4 are skipped and positions 1, 7 and x are evaluated. However, if the BM cost of position 1 is far higher than the current best BM cost, i.e., the BM cost of position 7, the probability that position 0 is the best position is low. The probability that the position 0 is the best position is higher if both the BM cost of positions 1, 7 and x are in a given range (not low).

In one third exemplary embodiment, the best MV that provides the lowest BM cost between both reference video picture lists L0 and L1. The motion vector candidate refining (second step of affine DMVR) is processed for a given list, i.e., only one MV is refined, the one of the corresponding reference video picture list (either L0 or L1). The MV refinement offset follows the usual scheme and search points order used by the affine DMVR as above discussed in relation with **Figure 16.**

On the encoder side, both reference video picture list MVs are refined sequentially and independently to identify and select the best prediction mode.

To measure the BM cost, the reference video picture list predictions need to be available.

In the state of the art, for a given PU, the distortion (for example evaluated by SAD) is evaluated per subblock (from the PU size to a 4x4 block), and both reference video picture list predictions are computed. A subblock is an aggregation of contiguous 4x4 blocks (at least one) that share the same MVs.

To optimize such an evaluation of the distortion (for example evaluated by SAD), the prediction of the reference video picture list that is not refined is unchanged/fixed and can be computed only once if the prediction is stored in a smart manner for the given PU. For example, for the first defined MV refinement offsets, both predictions are computed, while in the following MV refinement offsets, only the predictions of the refined video picture list are computed, saving half of the prediction computation.

Furthermore, instead of computing the distortion (for example evaluated by SAD) at the subblock level, it can be computed at the PU level. In the prior state of this art, the distortion (for example evaluated by SAD) between the two-reference video picture list predictions is computed per subblock and summed over all subblocks to have a distortion (for example evaluated by SAD) at the PU level. It is then possible to generate the predictions by subblock and to measure the distortion at the PU level afterward. It helps to reduce the number of function calls (one per PU instead of one per subblock), and to use more efficient intrinsic to reduce the run-time processing as bigger pixels surface are addressed.

In one fourth exemplary embodiment, step 172 is bypassed for a CPMV according to a comparison between a bilateral matching cost associated with said CPMV that is performed in the first step 171 and a threshold.

This fourth exemplary embodiment avoids spending time evaluating merge candidates and thus reducing the run-time-consuming of the affine DMVR method because step 172 is the most run-time-consuming of the affine DMVR method as described in relation with **Figure 17.**

In a first variant of the fourth exemplary embodiment, if the BM cost performed for a CPMV in step 171 is lower than a threshold TH1, step 172 is bypassed for said CPMV.

Then, the CPMV is partially optimized (refined).

Such an early termination supposes that the BM cost (distortion) is already low, and that the refinement considerably outperforms the current merge candidate Rate-Distortion trade-offs.

In a second variant of the fourth exemplary embodiment, if the BM cost performed for a CPMV in step 171 is higher than a threshold TH2, step 172 is bypassed for said CPMV.

Then, the CPMV is partially optimized (refined).

Such an early termination supposes that the BM cost (distortion) is quite high and that the merge candidate is not competitive enough.

In a third variant of the fourth exemplary embodiment, the thresholds TH1 and/ or TH2 are either adaptive to the PU size, or fixed.

During the iterative refinements (steps 171 and 172), the CPMVs are sequentially refined to improve compression efficiency. The affine DMVR method then tries to refine a first CPMV, then a second, and finally, in the case of a 6-parameters affine model a third CPMV. The refinements are processed exhaustively, i.e., all CPMVs are refined whatever the results of the preceding CPMV refinement.

In a third variant of the fourth exemplary embodiment, the second 172 step is bypassed for the third CPMV when a BM cost (distortion) associated with the first or second CPMV fulfils bypass conditions.

In one example embodiment of the third variant of the fourth exemplary embodiment, a bypass condition is fulfilled when the BM cost associated with the first or second CPMVs that is performed in the second step 172 in higher than the BM cost associated with the first or second CPMVs that is performed in the first step 171.

In one other example embodiment of the third variant of the fourth exemplary embodiment, a bypass condition is fulfilled when the BM cost associated with the first or second CPMV that is performed in the second step 172 in lower than the BM cost associated with the first or second CPMV that is performed in the first step 171 and if the decrease of said bilateral costs is lower than a third threshold TH3.

In a fifth exemplary embodiment, the affine DMVR method is disable over specific block (CU) shapes.

In the state of the art, the affine DMVR is executed for each CU with both CU height and CU width larger than or equal to 8 luma samples. However, the affine DMVR method may provide different run-times/compression efficiency trade-offs for all CU shapes. Consequently, it is interesting to disable an the affine DMVR over specific CU shapes for example when the run-times/compression efficiency trade-offs are not satisfying. By identifying the CU shapes on which the affine DMVR is not well performing, the affine DMVR may be disabled to save run times.

This fifth exemplary embodiment is further advantageous because when an affine DMVR is bypassed for a CU having a specific shape, the CU syntax signalled for this CU may also be bypassed to further reduce the bitrate.

In a first variant of the fifth exemplary embodiment, the affine DMVR method (steps 171 and 172) may be disable when a width or height of the block (CU) to be inter-coded is higher than a first value, e.g., 128, when said width and height are equal.

In a second variant of the fifth exemplary embodiment, the affine DMVR method (steps 171 and 172) may be disable when the width or height of the block (CU) to be inter-coded is higher than a second value, e.g., 64 when said width and height are different.

In a variant of the first and second variant of the fifth exemplary embodiment, CU shapes (width and heigh of the inter coded CU) that disable affine DMVR may be signalled in a bitstream to be replicated at the decoder side.

In a first exemplary embodiment of said variant, at least one specific CU shape that disables affine DMVR (steps 171 and 172) may be signalled by signalling maximal and/or minimal CU size, i.e., maximal and minimum CU width and/or height expressed for example as a number of pixels.

In a second exemplary embodiment of said variant, said at least one block shape that disables affine DMVR (steps 171 and 172) may be signalled by signalling minimal and/or maximal CU ratio between a maximum of the CU width and block height, and a minimum of the CU width and CU height.

In the state of the art, for each inter mode, a list of candidates is generated using neighbour blocks, temporal information and combined spatial, and temporal information as above discussed in the introducing part of the present application.

Regarding the affine DMVR method, a merge candidate list is generated using available spatial and temporal information. The merge candidate list is not optimal same merge candidates may be duplicated in the merge candidates list.

Duplicated merge candidates are suboptimal for several reasons.

Firstly, a duplicated merge candidate is evaluated by the DMVR method like the merge candidate but is not selected as it provides a lower compression efficiency due to a higher merge index compared to the merge candidate with a lower merge index. Then, evaluation duplicated merge candidates increases the run-time of the DMVR method for no compression enhancement.

Secondly, presence of duplicated merge candidates in the merge candidate list decreases Rate-Distortion performances of merge candidates following said duplicated merge candidates by increasing uselessly the merge indices associated with said following merge candidates.

Thirdly, when the merge candidate list is bounded, several potential merge candidates are discarded in the case of a list maximal size is reached while useless duplicated merge candidates exist in the merge candidate list.

To overcome such drawbacks, in one sixth exemplary embodiment, it is checked whether a new merge candidate intended to be added to the merge candidate list is not already present in the merge candidate list.

The sixth exemplary embodiment helps limit the run-time overhead of the DMVR method while providing better compression performances compared to a merge candidate list comprising at least one duplicate merge candidate.

In one variant of the sixth exemplary embodiment, the reference video picture index of a new merge candidate is compared to the reference video picture index of the merge candidates of the merge candidate list, and the MVs of both reference video picture lists (L0 and L1). In the case of an affine block, all CPMVs of both lists are compared. More precisely, each affine merge index refers to motion predictor information that indicates which CPMVs are used to derive the motion information. The motion information is represented by one uni-directional or bi-directional temporal prediction type, up-to 2 reference video picture indices and up-to 3 control points motion vectors (CPMVs), each associated with a reference video picture index of one of the two reference video picture lists (L0 or L1). Then, when comparing two affine merges candidates, the motion information of both lists (L0 or/and L1) are compared. For a list, it includes comparing the reference video picture index, and the CPMVs.

A potential candidate is identified as a duplicate if the reference indexes and the MVs/CPMVs are identical.

The variant of the sixth exemplary embodiment only discards strict duplicated merge candidates. It can be enhanced by discarding potential candidates with MVs/CPMVs too close to one list's candidate.

For an example, if all the differences between the MVs/CPMVs of the potential candidate and one merge candidate of the list, are lower than a threshold, the potential candidate is discarded.

The comparison comprises comparing the reference indexes, compute the MVs/CPMVs differences and compare the MVs/CPMVs differences with a threshold. In this example, the purpose is to compare the motion information of both candidates. It differs with the previous description, with the criteria over CPMVs is enlarged, discarding further candidates. It consists now in discarding a candidate with CPMVs similar to a list's candidate, i.e., that all CPMVs' differences of both merge candidates are lower than a threshold.

If the reference indexes are identical and the MVs/CPMVs difference is lower than a threshold TH4, the potential candidate is not added to the merge candidate list. The threshold TH4 can be either fixed, or adaptive, like adaptive to the PU size.

Regarding the DMVR method, at the encoder side, all the merge candidates of the merge candidate list are refined, i.e., the final merge candidates may differ from the list's merge candidates.

Consequently, it's possible that a list's merge candidate matches an affine DMVR refined merge candidate from the list. More precisely, the encoder will process the affine DMVR algorithm over all the affine merge candidates of the list. As described below, the affine DMVR refines the CPMVs of an affine merge candidate, so changes the CPMVs. It's then possible, that the Nth refined affine merge candidate of the list got motion information (video picture reference indexes and CPMVs) equals or similar (i.e., that the CPMVs are closed) to an affine merge candidate with a merge index higher than N.

In this case, it is inefficient to apply DMVR method on the matched merge candidate. It is then possible, at the encoder side (that needs to evaluate each merge candidate), to bypass a merge candidate DMVR refinement when a merge candidate is similar to a DMVR refined merge candidate. Similar strategies as above can be used to discard a merge candidate DMVR refinement.

In one seven exemplary embodiment, two refined CPMVs, associated to each reference picture, are obtained as output of the step 171 or as output of the step 172 or as output of a combination of the step 171 followed by the step 172. In step 171, for each non-refined CPMV, at least two refined CPMVs are derived at up to a sub-sample precision by performing a bilateral matching for a block centred on a non-refined CPMV, and a set of CPMVs is derived, said set of CPMVs comprising either non-refined and/or refined CPMVs at up to a sub-sample precision to lead to an overall predicted block with a minimum bilateral matching cost. In step 172, for each non-refined CPMV or each CPMV of the selected set of CPMVs (step 171) that is associated with a block, a refined CPMV is derived for said non-refined CPMV or said CPMV of the selected set of CPMVs at up to a sub-sample precision to minimize a bilateral matching cost of said block. The step 171 is bypassed when a first binary value (first flag) equals a first value, e.g. 1, and executed when said first binary value (first flag) equals a second value, e.g. 0, and the step 172 is bypassed when a second binary value (second flag) equals a first value, e.g. 1, and executed when said second binary value (flag) equals a second value, e.g. 0.

The seven exemplary embodiment is advantageous because it provides different run-times/compression efficiency trade-offs for all CU shapes, for different contents' characteristics. For an example, the encoding/decoding method can provide good run-times/compression efficiency trade-offs for natural contents, while degrading the global trade-offs on other content types like screen content.

In one variant of the seven exemplary embodiment, the first and second binary values (first and second flags) are signaled in a Video Parameter Set (VPS) of a bitstream carrying video data to indicate whether the step 171, respectively, 172 is enabled.

In one variant of the seven exemplary embodiment, the first and second binary values (first and second flags) are signaled in a Sequence Parameter Set (SPS) of a bitstream carrying video data to indicate whether the step 171, respectively, 172 is enabled for a whole video sequence.

In one variant of the seven exemplary embodiment, the first and second binary values (first and second flags) are signaled in a Picture Parameter Set (PPS) of a video bitstream to indicate whether the step 171, respectively, 172 is enabled for video pictures referring to said picture parameter set.

In one variant of the seven exemplary embodiment, the first and second binary values (first and second flags) are signaled in an Adaptation Parameter Set (APS) of a video bitstream to indicate whether the step 171, respectively, 172 is enabled for video pictures referring to said adaptation parameter set.

In one variant of the seven exemplary embodiment, when the first or the second value is signaled in a Video Parameter Set (VPS), in a Sequence Parameter Set (SPS), in a Picture Parameter Set (PPS) or in an Adaptation Parameter Set (APS), a binary value (flag) of a slice header of a slice of a video bitstream signals whether the step 172 or 171 is enabled for a video picture.

The first and second binary values (first and second flag) are not mandatory, i.e., none of them could be signaled and the usage of the two steps 171 and 172 is defined by default (e.g., always enabled or always disabled). Otherwise, only one of these binary values (flags) can be used. For example, it can be signaled only at the SPS level, discarding any slice adaptation, or on the contrary, signaled only at the slice header level, slightly increasing the amount of signaled data when the flag is unchanged.

In the fifth exemplary embodiments, the affine DMVR refinement is disabled for different block (CU) shapes whatever the video (content) characteristics. This may be a drawback. For an example, considering a video with a resolution of 416x240 pixels, the probability of CU with a height or width higher or equals to 64 may be lower than in a video with a resolution of 3840x2160.

Consequently, the usage of Affine DMVR refinement may be then impacted and may be dependent of the video characteristic like the resolution.

In a variant of the seven exemplary embodiment, the first and/or second binary values (first and/or second flag) is/are enabled/disabled according to a video characteristics such as video frame rate or video picture characteristics such video picture size (width and/or height), resolution.

In a variant of the seven exemplary embodiment, step 171 is disabled when width and height of the inter-coded block (block (CU) to be inter predicted) are higher than a first threshold when the width of the inter-coded block equals the height of the inter-coded block, and when a resolution of the video picture is higher than a first maximal resolution.

For example, the first threshold equals 128 and the maximal resolution equals 1920x1080 pixels.

For example, the first threshold equals 64 and the maximal resolution equals 416x240 pixels.

In one variant of the seven exemplary embodiment, step 171 is disabled when width and height of the inter-coded block is higher than a first threshold, e.g. 32, and when the width of the inter-coded block equals the high of the inter-coded block.

In one variant of the seven exemplary embodiment, step 172 is disabled when width and height of the inter-coded block is higher than a second threshold, when the width of the inter-coded block equals the height of the inter-coded block and when a video picture contains more than a given number of pixels.

For example the second threshold equals 32 and the given number of pixels equals 832x480.

In one variant of the seven exemplary embodiment, step 172 is disabled when width and height of the inter-coded block is higher than a second threshold, e.g. 32 and when the width of the inter-coded block equals the height of the inter-coded block.

A GOP (Group Of Picture) is a collection of successive pictures within a coded video stream. Each coded video stream consists of successive GOPs, from which the visible frames are generated.

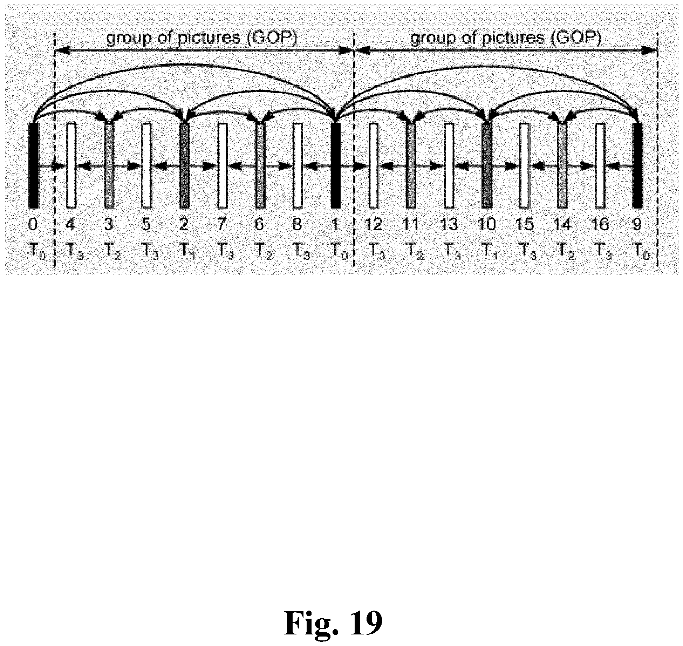

**Figure 19** shows an example of a typical inter-frame prediction structure that is used in the context of HEVC, VVC or ECM.

This typical inter-frame prediction structure is called hierarchical B pictures.

The GOP includes pictures decoded in a different order than the displayed order (number just below the frame). Each frame is associated with a temporal layer identifier Ti in the figure. The temporal layer identifier starts from 0 for the base layer and is increased by 1 from one temporal layer to the next.

Each temporal layer (with an identifier higher than 0) depends on a lower temporal layer to be decoded. In a nutshell, pictures from a temporal layer (with an identifier higher than 0) use pictures of a lower temporal layer as reference to create the inter prediction.

Lower the temporal layer identifier, higher the frame importance.

Using a hierarchical GOP structure as depicted in Erreur ! Source du renvoi introuvable. **19** enhances the compression efficiency while increasing the delay. In the context of HEVC, VVC or ECM, GOP structure with 5 temporal layers are used in random access scenario.

In a variant of the seven exemplary embodiment, step 171 and/or step 172 is disabled for a video picture with a temporal layer higher or equals to a threshold, e.g., 3.

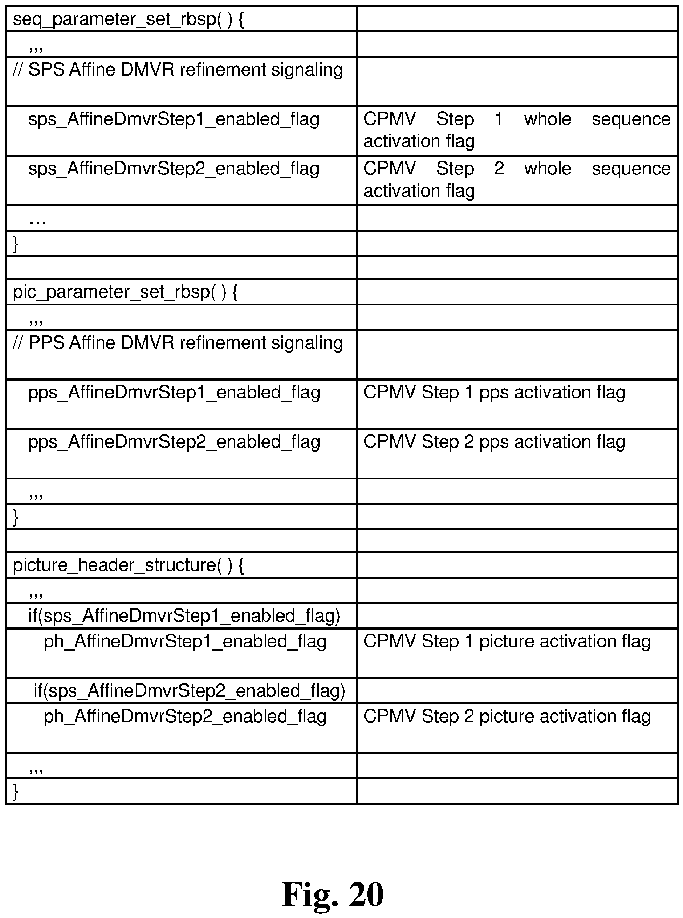

**Figure 20** shows an example of syntax to signal the activation or deactivation of the two steps 171 and 172 at different levels (SPS, PPS and picture header) in accordance with exemplary embodiments of the present invention. Here, the picture header signaling is only dependent of the SPS signaling (just an example).

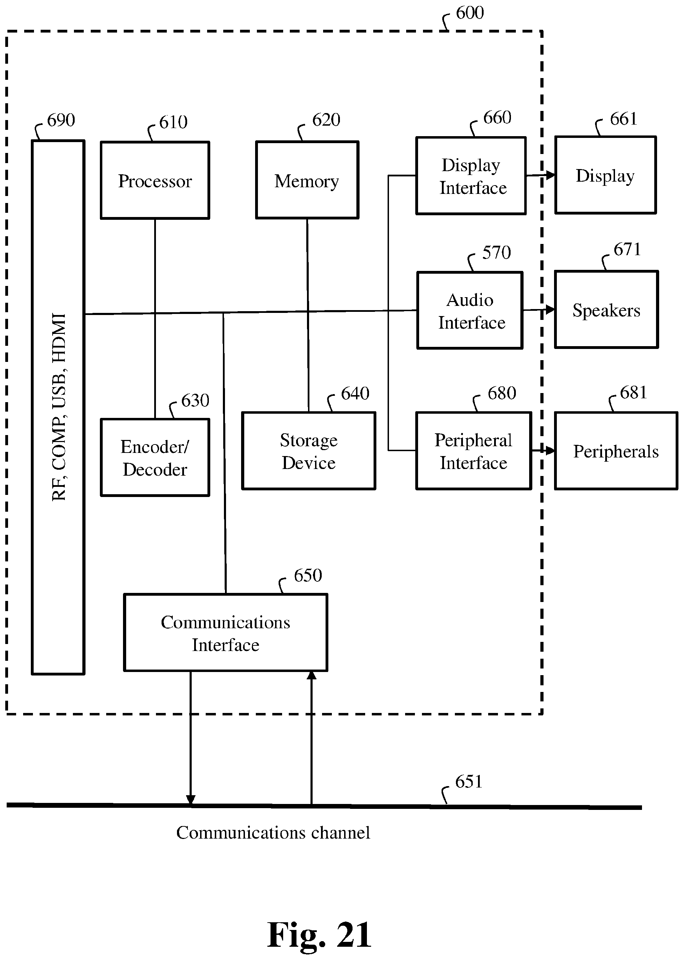

**Figure 21** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-21,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk;

a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of decoding a video picture by means of motion compensated temporal bi-prediction of an inter coded block using two reference video pictures in two separate reference video picture lists, and two affine motion fields defined by at least two control point motion vectors, denoted non-refined CPMVs, associated to each reference picture, refined CPMVs being obtained as output of a first step (171) or as output of a second step (172) or as output of a combination of the first step (171) followed by the second step (172),

   - in said first step (171), for each non-refined CPMV, deriving at least two refined CPMVs at up to a sub-sample precision by performing a bilateral matching for a block centred on the non-refined CPMV, and deriving a set of CPMVs comprising either non-refined and/or refined CPMVs at up to a sub-sample precision to lead to an overall predicted block with a minimum bilateral matching cost,
   - in said second step (172), for each non-refined CPMV or each CPMV of the selected set of CPMVs (step 171) that is associated with a block, deriving a refined CPMV for said non-refined CPMV or said CPMV of the selected set of CPMVs at up to a sub-sample precision to minimize a bilateral matching cost of said block, wherein the first step is bypassed when a first binary value equals a first value, and executed when said first binary value equals a second value, and the second step is bypassed when a second binary value equals a first value, and executed when said second binary value equals a second value.

2. The method of claim 1, wherein the first and second binary values are signaled in a video parameter set (VPS) of a bitstream carrying video data to indicate whether the first, respectively, the second step is enabled.

3. The method of claim 1, wherein the first and second binary values are signaled in a sequence parameter set (SPS) of a bitstream carrying video data to indicate whether the first, respectively, the second step is enabled for a whole video sequence.

4. The method of claim 1, wherein the first and second binary values are signaled in a picture parameter set (PPS) of a video bitstream to indicate whether the first, respectively, the second step is enabled for video pictures referring to said picture parameter set.

5. The method of claim 1, wherein the first and second binary values are signaled in an adaptation parameter set (APS) of a video bitstream to indicate whether the first, respectively, the second step is enabled for video pictures referring to said adaptation parameter set.

6. The method of claim 1, wherein when the first or the second value is signaled in a video parameter set (VPS), in a sequence parameter set (SPS), in a picture parameter set (PPS) or in an adaptation parameter set (APS), a binary value of a slice header of a slice of a video bitstream signals whether the second or first step is enabled for a video picture.

7. The method of one of previous claims, wherein the first and/or second binary values is/are enabled/disabled according to a video characteristics or video picture characteristics.

8. The method of claim 7, wherein the first step is disabled when width and height of the inter-coded block are higher than a first threshold, when the width of the inter-coded block equals the height of the inter-coded block, and when a resolution of the video picture is higher than a maximal resolution.

9. The method of claim 7, wherein the first step is disabled when width and height of the inter-coded block is higher than a first threshold, and when the width of the inter-coded block equals the height of the inter-coded block.

10. The method of one of previous, wherein the second step is disabled when width and height of the inter-coded block are higher than a second threshold and when a video picture contains more than a given number of pixels.

11. The method of one of claims 1 to 10, wherein the second step is disabled when width and height of the inter-coded block is higher than a third threshold and when the width of the inter-coded block equals the height of the inter-coded block.

12. The method of one of claims 7 to 11, wherein the first and/or second step is disabled for the video picture with a temporal layer higher or equals to a third value.

13. A system comprising means for performing one of the methods claimed in any one of claims 1 to 12.

14. A computer program product including instructions which, when the program is executed by one or more processors, causes the one or more processors to carry out a method claimed in any one of claims 1 to 12.

15. A non-transitory storage medium carrying instructions of program code for executing a method claimed in any one of claims 1 to 12.

**Fig. 1**

**Fig. 2**

# Fig. 3

SBTV    SBTH    STTV    STTH

# Fig. 4

**Fig. 5**

200

210   220   230   240

250

260

270

DPB

# Fig. 6

# Fig. 7

L0 reference

L1 reference

# Fig. 8

Reference picture          Current picture          Reference picture

# Fig. 9

**Fig. 10**

**Fig. 11**

**Fig. 12**

$(x_0,y_0)$  $(x_1,y_1)$

$\vec{v_0}$  $\vec{v_1}$

$(x_2,y_2)$  $(x_3,y_3)$  Current block

$\vec{v_2}$  $\vec{v_3}$

$\vec{v_4}$  A

$(x_4,y_4)$

**Fig. 13**

| B2 | B3 | | B1 | B0 |

A2

Current block

A1

A0  T

**Fig. 14**

MV1'

MV0  -Mdiff

MV1

Mdiff

MV0'

Reference video picture in LO  Reference video picture in LO

**Fig. 15**

| 0 | 1 | 2 |
|---|---|---|
| 7 | x | 3 |
| 6 | 5 | 4 |

# Fig. 16

171 ⌐    172 ⌐

# Fig. 17

| 0 | 1 | 2 |   |
|---|---|---|---|
| 7 | x | 3 | 2 |
| 6 | 5 | 4 | 3 |
|   | 6 | 5 | 4 |

# Fig. 18

**Fig. 19**

| | |
|---|---|
| seq_parameter_set_rbsp( ) { | |
| ,,, | |
| // SPS Affine DMVR refinement signaling | |
| sps_AffineDmvrStep1_enabled_flag | CPMV Step 1 whole sequence activation flag |
| sps_AffineDmvrStep2_enabled_flag | CPMV Step 2 whole sequence activation flag |
| ... | |
| } | |
| | |
| pic_parameter_set_rbsp( ) { | |
| ,,, | |
| // PPS Affine DMVR refinement signaling | |
| pps_AffineDmvrStep1_enabled_flag | CPMV Step 1 pps activation flag |
| pps_AffineDmvrStep2_enabled_flag | CPMV Step 2 pps activation flag |
| ,,, | |
| } | |
| | |
| picture_header_structure( ) { | |
| ,,, | |
| if(sps_AffineDmvrStep1_enabled_flag) | |
| ph_AffineDmvrStep1_enabled_flag | CPMV Step 1 picture activation flag |
| if(sps_AffineDmvrStep2_enabled_flag) | |
| ph_AffineDmvrStep2_enabled_flag | CPMV Step 2 picture activation flag |
| ,,, | |
| } | |

# Fig. 20

600

690

610
Processor

620
Memory

660
Display
Interface

661
Display

RF, COMP, USB, HDMI

570
Audio
Interface

671
Speakers

630
Encoder/
Decoder

640
Storage
Device

680
Peripheral
Interface

681
Peripherals

650
Communications
Interface

651

Communications channel

# Fig. 21

Europäisches Patentamt
European Patent Office
Office européen des brevets

# EUROPEAN SEARCH REPORT

**Application Number**

EP 23 30 5376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG (QUALCOMM) H ET AL: "EE2-related: Control-point motion vector refinement for affine DMVR", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0178 ; m60966 22 October 2022 (2022-10-22), XP030304765, Retrieved from the Internet: URL:https://jvet-experts.org/doc_end_user/ documents/28_Mainz/wg11/JVET-AB0178-v2.zip JVET-AB0178.pdf [retrieved on 2022-10-22] * slide "Proposed method" * ----- | 1-15 | INV. H04N19/96 H04N19/119 H04N19/176 H04N19/70 H04N19/52 H04N19/577 H04N19/54 H04N19/103 |
| X,D | HUANG (QUALCOMM) H ET AL: "EE2-related: Control-point motion vector refinement for affine DMVR", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0178 ; m60966 14 October 2022 (2022-10-14), XP030304764, Retrieved from the Internet: URL:https://jvet-experts.org/doc_end_user/ documents/28_Mainz/wg11/JVET-AB0178-v1.zip JVET-AB0178-v1.docx [retrieved on 2022-10-14] * abstract * * sections 1, 2 * ----- | 1-15 | **TECHNICAL FIELDS SEARCHED (IPC)**  H04N |

-/--

The present search report has been drawn up for all claims

| Place of search | Date of completion of the search | Examiner |
|---|---|---|
| Munich | 17 August 2023 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/389656 A1 (HUANG HAN [US] ET AL) 10 December 2020 (2020-12-10) * abstract * * paragraphs [0139] - [0200], [0214] - [0220] * * figures 10, 11 * | 1-15 | |
| A | WO 2020/008343 A1 (BEIJING BYTEDANCE NETWORK TECH CO LTD [CN]; BYTEDANCE INC [US]) 9 January 2020 (2020-01-09) * abstract * * paragraphs [0029] - [0042] * * figure 2 * | 1-15 | |
| A | US 2021/385481 A1 (LIU HONGBIN [CN] ET AL) 9 December 2021 (2021-12-09) * abstract * * paragraphs [0011] - [0013], [0172] - [0244], [0335] * * figures 16, 26 * | 1-15 | TECHNICAL FIELDS SEARCHED (IPC) |

The present search report has been drawn up for all claims

| Place of search | Date of completion of the search | Examiner |
|---|---|---|
| Munich | 17 August 2023 | Fassnacht, Carola |

## ANNEX TO THE EUROPEAN SEARCH REPORT
## ON EUROPEAN PATENT APPLICATION NO.

EP 23 30 5376

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2023

| Patent document cited in search report | Publication date | Patent family member(s) | Publication date |
|---|---|---|---|
| US 2020389656 A1 | 10-12-2020 | BR 112021023545 A2 | 04-01-2022 |
| | | CN 114097234 A | 25-02-2022 |
| | | EP 3981159 A1 | 13-04-2022 |
| | | JP 2022535528 A | 09-08-2022 |
| | | KR 20220017906 A | 14-02-2022 |
| | | SG 11202112038X A | 30-12-2021 |
| | | TW 202123711 A | 16-06-2021 |
| | | US 2020389656 A1 | 10-12-2020 |
| | | WO 2020247760 A1 | 10-12-2020 |
| WO 2020008343 A1 | 09-01-2020 | CN 110677659 A | 10-01-2020 |
| | | CN 115334312 A | 11-11-2022 |
| | | EP 3791583 A1 | 17-03-2021 |
| | | JP 7104188 B2 | 20-07-2022 |
| | | JP 2021530142 A | 04-11-2021 |
| | | JP 2022125267 A | 26-08-2022 |
| | | KR 20210027351 A | 10-03-2021 |
| | | TW 202007165 A | 01-02-2020 |
| | | US 2020382807 A1 | 03-12-2020 |
| | | US 2022174309 A1 | 02-06-2022 |
| | | WO 2020008343 A1 | 09-01-2020 |
| US 2021385481 A1 | 09-12-2021 | CN 113647099 A | 12-11-2021 |
| | | CN 115190317 A | 14-10-2022 |
| | | EP 3922014 A1 | 15-12-2021 |
| | | JP 7307192 B2 | 11-07-2023 |
| | | JP 2022527751 A | 06-06-2022 |
| | | KR 20210145747 A | 02-12-2021 |
| | | US 2021385481 A1 | 09-12-2021 |
| | | WO 2020200269 A1 | 08-10-2020 |

EPO FORM P0459

For more details about this annex : see Official Journal of the European Patent Office, No. 12/82

**EP 4 436 184 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. COBAN ; F. LE L6ANNEC ; R.-L. LIAO ; K. NASER ; J. STRÖM ; L. ZHANG.** Algorithm description of Enhanced Compression Model 7 (ECM 7). *Document JVET-AB2025, Joint Video Experts Team (JVET) of ITU-T SG 16 WP 3 and ISO/IEC JTC 1/SC 29, 28th Meeting, Germany,* 21 October 2022, https://jvet-experts.org/doc_end_user/documents/28_Mainz/wg11/JVET-AB2025-v1.zip

- **J.M. BOYCE.** *Weighted prediction in the H.264/MPEG AVC video coding standard,* May 2004